# EUROPÄISCHE PATENTSCHRIFT

(11) **EP 0 757 997 B1**
(45) Veröffentlichungstag und Bekanntmachung des Hinweises auf die Patenterteilung: **17.11.1999**
(21) Anmeldenummer: 96110357.9
(22) Anmeldetag: 27.06.1996
(51) Int. Cl.: C08F 10/10, C08F 4/12, C08F 2/12, C08F 4/00

(54) **Verfahren zur Herstellung von Polyisoolefinen mittels neuer Initiatorsysteme**
Process for the preparation of polyisoolefins using new initiator systems
Procédé de préparation de polymères d'iso-oléfines utilisant de systèmes d'initiateurs nouveaux

(30) Priorität: 10.07.1995 DE 19525035
(43) Veröffentlichungstag der Anmeldung: 12.02.1997
(73) Patentinhaber: BAYER AG, 51368 Leverkusen (DE)
(72) Erfinder: Langstein, Gerhard, Dr., 51515 Kürten (DE); Freitag, Dieter, Dr., 47802 Krefeld (DE); Lanzendörfer, Michael, 91257 Pegnitz (DE); Weiss, Karin, Dr., 95463 Bindlach (DE)

(56) Entgegenhaltungen:
- EP-A- 0 115 635
- BE-A- 663 320
- US-A- 3 948 868

## Beschreibung

Die vorliegende Erfindung betrifft ein Verfahren zur Herstellung von Polyisoolefinen durch Polymerisation in Lösung, in Suspension oder in der Gasphase von Isoolefinen, gegebenenfalls in Gegenwart von konjugierten oder nicht konjugierten Dienen, und/oder kationisch polymerisierbaren, ein- oder mehrfach ungesättigten Verbindungen. Des weiteren betrifft die vorliegende Erfindung Initiatorsysteme für die Polymerisation von Isoolefinen.

Die kationische Polymerisation von Isoolefinen, ganz besonders von Isobuten, ist seit langem bekannt und in zahlreichen Veröffentlichungen beschrieben (siehe z.B. J. P. Kennedy, E. Marechal, Carbocationic Polymerization, 1982, A. Gandini und H. Cheradame in Advances in Polymer Science, Band 34/35 (1980)). Als Initiatoren für die Polymerisation werden nach dem Stand der Technik Lewis-Säuren oder Protonensäuren verwendet. Die Polymerisation wird bevorzugt in Gegenwart von halogenierten Kohlenwasserstoffen, wie Methylchlorid, Methylenchlorid oder Kohlenstofftetrachlorid, durchgeführt.

Die Verwendung von Ethylaluminiumdichloride und t-Butylchlorid ist aus EP-A-0 115 635 bekannt.

Nachteilig bei den bekannten Verfahren ist jedoch, daß häufig nur niedermolekulare Polymerisate erhalten werden und die Polymerisation erfolgreich nur bei niedrigen Temperaturen in polaren, insbesondere halogenierten Lösungsmitteln durchzuführen ist.

Aufgabe der vorliegenden Erfindung ist es nun, ein Verfahren zur Verfügung zu stellen, nach dem Isoolefine zu hochmolekularen Produkten bei höheren Temperaturen als bislang üblich homo- oder copolymerisiert werden können.

Es wurde nun gefunden, daß hochmolekulare Polyisoolefine bei erhöhten Temperaturen hergestellt werden können, wenn man die Polymerisation der Isoolefine in Gegenwart neuer Initiatorsysteme durchführt, die basieren auf Aluminoxan-Verbindungen und ein- oder mehrfach funktionalisierten Kohlenwasserstoffen der allgemeinen Formel R³, R⁴, R⁵C-X mit X insbesondere für Halogen.

Gegenstand der vorliegenden Erfindung ist demnach ein Verfahren zur Herstellung von Polyisoolefinen, das dadurch gekennzeichnet ist, daß man Isoolefine der Formel CH₂= CR¹, R² mit R' für Methyl und R² für C₁-C₁₀-Alkyl oder C₃-C₁₀-Cycloalkyl, gegebenenfalls mit konjugierten oder nicht konjugierten Dienen mit 4 bis 20 Kohlenstoffatomen und/oder kationisch polymerisierbaren, ein- oder mehrfach ungesättigten Verbindungen mit 4 bis 20 Kohlenstoffatomen, bei Temperaturen von -100°C bis +200°C und Drücken von 0,1 bis 100 bar in Lösung, in Suspension oder in der Gasphase polymerisiert in Gegenwart von Initiatorsystemen bestehend aus:
a) Kohlenwasserstoffen der Formel (I) 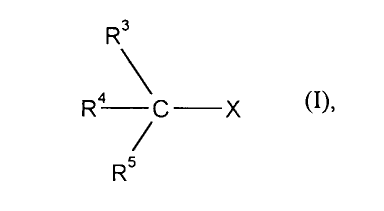 in der
   - X: für Halogen, SCN, CN, OH, OR⁵, OCOR⁵ oder COOR⁵ mit R⁵ für C₁-C₁₀-Alkyl oder C₃-C₁₀-Cycloalkyl, bevorzugt für Halogen, steht und
   - R³, R⁴, R⁵: gleich oder verschieden sind und Wasserstoff, gegebenenfalls mit X substituiertes C₁-C₁₀-Alkyl, C₃-C₁₀-Cycloalkyl, C₆-C₁₈-Aryl, C₃-C₁₀-Alkenyl oder C₃-C₁₀-Alkin bedeuten,
   und
b) einer offenkettigen und/oder cyclischen Aluminoxanverbindung der Formel (II) oder (III)

   R^{x}R^{y}Al[O-AlR^{z}]ₘR^{w} (II),

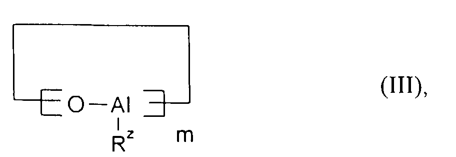

   in der
   - R^{x}, R^{y}, R^{z}, R^{w}: C₁-C₁₂-Alkyl entsprechen und
   - m: eine ganze Zahl von 5 bis 30 darstellt.

Als Isoolefine werden bevorzugt solche eingesetzt mit R¹ = Me , R² für C₁-C₆-Alkyl, wie Methyl, Ethyl, Propyl. Besonders bevorzugt sind Isobuten und 2-Methylbuten-1, insbesondere Isobuten. Als konjugierte oder nicht konjugierte Diene mit 4 bis 20, bevorzugt 4 bis 10, besonders bevorzugt 4 bis 6 Kohlenstoffatomen kommen für das erfindungsgemäße Verfahren in Frage: Butadien, Isopren, Piperylen, 2,3-Dimethylbutadien, 2,4-Dimethylpentadien-1,3, Cyclopentadien, Methylcyclopentadien, Limonen, Myrcen und 1,3-Cyclohexadien, bevorzugt Isopren, Piperylen und 2,3-Dimethylbutadien, besonders bevorzugt Isopren. Als weitere copolymerisierbare ein- oder mehrfach ungesättigte organische Verbindungen mit bevorzugt 4 bis 10 Kohlenstoffatomen sind für das erfindungsgemäße Verfahren geeignet: Styrol, p-Methylstyrol und Divinylbenzol, besonders bevorzugt Divinylbenzol.

Bei dem erfindungsgemäßen Verfahren werden die konjugierten oder nicht konjugierten Diene und/oder die ein- oder mehrfach ungesättigten organischen Verbindungen in Mengen von 0,01 bis 20 Mol-%, bevorzugt in Mengen von 1 bis 10 Mol-% einpolymerisiert, wobei die Diene und die mehrfach ungesättigten organischen Verbindungen in jedem Mischungsverhältnis untereinander einpolymerisiert werden können.

Die erfindungsgemäße Polymerisation wird in bekannter Weise in Lösung, Suspension oder in der Gasphase kontinuierlich oder diskontinuierlich, ein- oder mehrstufig bei einer Temperatur von -100°C bis +200°C, bevorzugt von -100°C bis +100°C, besonders bevorzugt -50°C bis +50°C, und bei einem Druck von 0,1 bis 100 bar, bevorzugt 1 bis 50 bar, durchgeführt.

Dabei wird die Initiatorkomponente a) in einer Konzentration von 10⁻³ bis 10⁻⁷, vorzugsweise 10⁻⁴ bis 10⁻⁶ Mol pro Liter Reaktorvolumen eingesetzt.

Die Initiatorkomponente b) (Aluminoxan) wird in einem molaren Verhältnis zur Komponente a) von 1 : 100 bis 10⁴ : 1, bevorzugt von 1 : 10 bis 10² : 1, ganz besonders bevorzugt von 1 : 1 bis 10 : 1 eingesetzt (Komp.b) : Komp.a)).

Als Komponente a) des Initiatorsystems kommen insbesondere solche Kohlenwasserstoffe der Formel (I) in Betracht, in denen X für Chlor oder Brom, insbesondere Chlor, steht, und R³, R⁴, R⁵ gleich oder verschieden sind und Wasserstoff, C₁-C₁₀-Alkyl, C₃-C₁₀-Cycloalkyl, C₆-C₈-Aryl, C₃-C₁₀-Alkenyl oder C₃-C₁₀-Alkin bedeuten, insbesondere C₁-C₁₀-Alkyl. Bevorzugt werden genannt: Methylchlorid, Chlorethan und 2-Chlorpropan.

Als Komponente b) eignen sich bevorzugt Methyl-, Ethyl- oder Butylaluminoxane, insbesondere Methylaluminoxan, wie z.B. in Polyhedron Vol. 7, Nr. 22 /23 (1988) S. 2375ff beschrieben.

Ganz besonders bevorzugt besteht das neue Initiatorsystem für die Polymerisation von Isoolefinen aus folgenden Komponenten a) : Methylchlorid, Ethylchlorid und/oder Benzylchlorid und folgender Komponente b) : Methylaluminoxan.

Die Zugabe der Initiatorkomponenten a) und b) zum Monomergemisch kann gleichzeitig oder nacheinander, kontinuierlich oder diskontinuierlich erfolgen. Die Aluminoxane können auch in situ durch Hydrolyse entsprechender Aluminiumalkyle erzeugt werden. Darüber hinaus ist es möglich, die Initatorkomponenten in präformierter Form einzusetzen. Unter Präformierung versteht man die Alterung der Komponenten in Abwesenheit der einzusetzenden Monomeren.

Die erfindungsgemäße Polymerisation wird bevorzugt in Lösung oder Suspension durchgeführt. Als Lösungs- oder Suspensionsmittel kommen solche organische Lösungs- oder Suspensionsmittel in Frage, die unter den Reaktionsbedingungen sich inert verhalten, wie Hexan, Isopentan und/oder Toluol, bevorzugt Hexan.

Die günstigste Menge an Lösungs- oder Suspensionsmittel kann leicht durch entsprechende Vorversuche ermittelt werden. Sie beträgt im allgemeinen 80-95 Vol.-%, bezogen auf die Summe aus Lösungs- oder Suspensionsmittel und Monomer.

Das erfindungsgemäße Verfahren kann beispielsweise wie folgt durchgeführt: Der auf Reaktionstemperatur gekühlte Reaktor wird z.B. mit gereinigtem Lösungsmittel und den Monomeren beschickt. Nach Temperieren des Reaktors auf die gewünschte Reaktionstemperatur wird ein kleiner Teil der Initiatorkomponente b) zudosiert und mit der Monomermischung gerührt. Anschließend werden die Initiatorkomponente a) und der Rest der Initiatorkomponente b) zudosiert und der Reaktorinhalt kräftig durchmischt. In einer bevorzugten Ausführungsform werden die Initiatorkomponente a) und der Rest der Initiatorkomponente b) vorher einige Zeit gemischt, bevor sie dem Reaktionsgemisch zugegeben werden.. Alle Manipulationen werden unter Schutzgas, wie Stickstoff oder Argon, durchgeführt. Der Verlauf der Reaktion wird anhand der Wärmeentwicklung verfolgt. Nach Beendigung der exothermen Reaktion wird z.B. mit 2,5-Di-tert.-butyl-4-methylphenol, gelöst in Ethanol, abgestoppt. Der Reaktor wird anschließend entspannt, die anfallende Lösung des Polymeren auf die übliche Art und Weise durch Strippen aufgearbeitet oder, falls gewünscht, in einer nachfolgenden Reaktion einer Halogenierung zugeführt. Auf diese Weise kann das erhaltene Polymere direkt funktionalisiert, d.h. halogeniert werden.

Gegenstand der vorliegenden Erfindung ist auch ein Initiatorsystem zur Polymerisation von Isoolefinen, bestehend aus
a) Kohlenwasserstoffen der Formel (I) 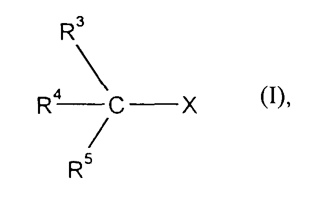 in der
   - X: für Halogen, SCN, CN, OH, OR⁵, OCOR⁵ oder COOR⁵ mit R⁵ für C₁-C₁₀-Alkyl oder C₃-C₁₀-Cycloalkyl, bevorzugt für Halogen, steht und
   - R³, R⁴, R⁵: gleich oder verschieden sind und Wasserstoff, gegebenenfalls mit X substituiertes C₁-C₁₀-Alkyl, C₃-C₁₀-Cycloalkyl, C₆-C₁₈-Aryl, C₂-C₁₀-Alkinyl oder C₃-C₁₀-Alkin bedeuten, und
b) einer offenkettigen und/oder cyclischen Aluminoxanverbindung der Formel (II) oder (III)

   R^{x}R^{y}Al[O-AlR^{z}]ₘR^{w} (II),

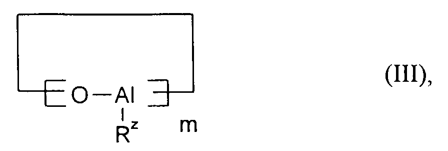

   in der
   - R^{x}, R^{y}, R^{z}, R^{w}: C₁-C₁₂-Alkyl entsprechen und
   - m: eine ganze Zahl von 5 bis 30 darstellt.

Es ist besonders überraschend, daß es erfindungsgemäß gelingt z.B. primäre Alkylhalogenide, wie Methylchlorid, in Kombination mit Aluminoxanen, für die Polymerisation von Isoolefinen einzusetzen, da bislang nur tert.-Alkylverbindungen durch Coinitatoren aktivierbar waren, d.h. für die Polymerisation von Isoolefinen verwendet wurden. Ebenso überraschend ist der Befund, daß durch das neue erfindungsgemäße Initiatorsystem Polyisoolefine hergestellt werden können, deren Molekulargewichte deutlich über denen des Standes der Technik liegen.

Die nach dem erfindungsgemäßen Verfahren hergestellten Polyisoolefine besitzen mittlere Molekulargewichte M_{w} von 2 bis 20 000 kg/mol, bevorzugt 20 bis 10 000 kg/mol, ganz besonders bevorzugt 200 bis 800 kg/mol. Die Ausbeuten liegen im allgemeinen über 90 % der Theorie (gravimetrisch bestimmt).

### Beispiele

### Allgemeine Beschreibung der Polymerisationsversuche:

Gereinigtes und getrocknetes Lösungsmittel wurde unter Schutzgas (Argon) vorgelegt und auf -78°C gekühlt. Anschließend wurde Isobuten einkondensiert und die Menge durch Auswiegen bestimmt. Danach wurde im entsprechenden molaren Verhältnis die Initiatorkomponente zupipettiert und die Reaktion durch Zugabe des Coinitiators gestartet.

Als Coinitiator wurde verwendet: Methylaluminoxan (30 %ige Lösung in Toluol) (MAO).

Nach erreichtem Umsatz wurde die Reaktion mit einer 1%igen Lösung von 2,6-Di-tert.-butylkresol in Ethanol abgestoppt. Das Polymer wurde in üblicher Weise isoliert und getrocknet. Die eingesetzte Initiatorkomponente ist in Tabelle 1 aufgeführt.

### Polymerisationsbeispiele:

**Tabelle 1**

| Beispiel | Initiator | Lösungsmittel (ml) | Initiator (a) (mmol/l) | Coinitiator (b) (mmol/l) MAO = (I) Et₂AlCl = (II)* | Umsatz (%) | M_{w} (kg/mol) |
|---|---|---|---|---|---|---|
| 1 | 2-Chlorpropan | Toluol (15) | 5,95 | 59,5 (I) | 90,4 | 351 |
| 2 | Neopentylchlorid | Toluol (15) | 5,95 | 59,5 (I) | 100 | 396 |
| 3 | t-Butylchlorid | Toluol (15) | 5,95 | 59,5 (I) | 87,6 | 30 |
| 4 | t-Butylchlorid | Hexan (15) | 5,95 | 59,5 (I) | 79,2 | 115 |
| 5* | t-Butylchlorid | Toluol (15) | 5,95 | 59,5 (II) | 94,2 | 35* |
| 6 | 1-Chlorpentan | Toluol (15) | 5,95 | 59,5 (I) | 56,8 | 740 |
| 7 | 1-Chlorpentan | Hexan (15) | 5,95 | 59,5 (I) | 37,5 | 941 |
| 8 | 1-Chlorhexan | Hexan (15) | 5,95 | 59,5 (I) | 45,2 | 715 |
| 9 | Chlorethan | Toluol (15) | 5,95 | 59,5 (I) | 61,5 | 496 |
| 10 | Chlorethan | Hexan (15) | 5,95 | 59,5 (I) | 100 | 610 |
| 11 | Chlorethan | Hexan (15) | 11,92 | 59,5 (I) | 39,5 | 986 |
| 12* | Chlorethan | Toluol (15) | 5,96 | 59,6 (II) | 32,8 | 375* |
| 13 | Chlormethan | Hexan (15) | 5,95 | 59,5 (I) | 100 | 580 |
| 14 | 1-Chlorbutan | Hexan (15) | 5,95 | 59,5 (I) | 89,4 | 598 |

| | | | | | | |
|---|---|---|---|---|---|---|
| * Vergleichsbeispiel | | | | | | |

**Reaktionsbedingungen:** t_{Reaktor}= 5 h bei T_{Reakt}= -40°C; 24 h bei -33°C (Versuch 1 bis 9) oder 24 h bei -40°C (Versuch 10 bis 14) (ungerührt);
Monomerkonzentration: 5,95 mol/l

**Tabelle 2**

| **Vergleichsbeispiele (ohne Coinitiator)** | | | | |
|---|---|---|---|---|
| Beispiel | Initiator | Konzentration (mmol/l) | Lösungsmittel (ml) | Umsatz (%) |
| 1 | MAO | 59,5 | Hexan (15) | 0 |
| 2 | Et₂AlCl | 5,95 | Hexan (15) | 0 |
| 3 | Chlorethan | 5,95 | Hexan (15) | 0 |

### Ergebnis:

Wie aus den Vergleichsbeispielen (Tabelle 2) ersichtlich ist, initiieren weder MAO noch Diethylaluminiumchlorid noch Chloralkane ohne Coinitiator die Isobutenpolymerisation unter den oben genannten Bedingungen.

Bei Verwendung von MAO als Coinitiator und gleichzeitig primärem Alkylhalogenid als Initiator erhält man gegenüber dem Stand der Technik (Beispiel 5 und 12 in Tabelle 1) bei hohen Umsätzen deutlich höhere Molekulargewichte und kann deshalb aufgrund der bekannten Temperaturabhängigkeit der Molekulargewichte bei höheren Temperaturen polymerisieren.

## Patentansprüche

1. Verfahren zur Herstellung von Polyisoolefinen, dadurch gekennzeichnet, daß man Isoolefine der Formel CH₂= CR¹, R² mit R¹ für Methyl und R² für C₁-C₁₀-Alkyl oder C₃-C₁₀-Cycloalkyl, gegebenenfalls mit konjugierten oder nicht konjugierten Dienen mit 4 bis 20 Kohlenstoffatomen und/oder kationisch polymerisierbaren, ein- oder mehrfach ungesättigten Verbindungen mit 4 bis 20 Kohlenstoffatomen, bei Temperaturen von -100°C bis +200°C und Drücken von 0,1 bis 100 bar in Lösung, in Suspension oder in der Gasphase polymerisiert in Gegenwart von Initiatorsystemen bestehend aus:
a) Kohlenwasserstoffen der Formel (I) 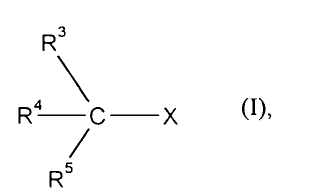 in der
X für Halogen, SCN, CN, OH, OR⁵, OCOR⁵ oder COOR⁵ mit R⁵ für C₁-C₁₀-Alkyl oder C₃-C₁₀-Cycloalkyl, steht und
R³, R⁴, R⁵ gleich oder verschieden sind und Wasserstoff, gegebenenfalls mit X substituiertes C₁-C₁₀-Alkyl, C₃-C₁₀-Cycloalkyl, C₆-C₁₈-Aryl, C₂-C₁₀-Alkinyl oder C₃-C₁₀-Alkin bedeuten,
und
b) einer offenkettigen und/oder cyclischen Aluminoxanverbindung der Formel (II) oder (III)
R^{x}R^{y}Al[O-AlR^{z}]ₘR^{w} (II), 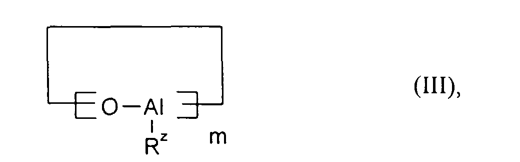
in der
R^{x}, R^{y}, R^{z}, R^{w} C₁-C₁₂-Alkyl entsprechen und
m eine ganze Zahl von 5 bis 30 darstellt.

2. Verfahren nach Anspruch 1, dadurch gekennzeichnet, daß man bei Temperaturen von -100 bis +100°C arbeitet.

3. Verfahren nach Ansprüchen 1 und 2, dadurch gekennzeichnet, daß man bei Drücken von 1 bis 50 bar arbeitet.

4. Verfahren nach Ansprüchen 1 bis 3, dadurch gekennzeichnet, daß man die Initiatorkomponente a) in einer Konzentration von 10⁻² bis 10⁻⁷ Mol pro Liter Reaktionsvolumen oder Reaktor einsetzt.

5. Verfahren nach Ansprüchen 1 bis 4, dadurch gekennzeichnet, daß man die Initiatorkomponente b) in einem molaren Verhältnis zur Komponente a) von 1 : 100 bis 10⁴ : 1 einsetzt.

6. Initiatorsystem zur Polymerisation von Isoolefinen bestehend aus:
a) Kohlenwasserstoffen der Formel (I) 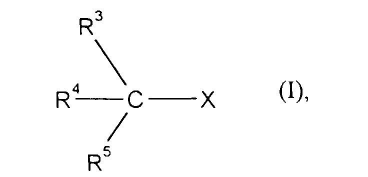 in der
X für Halogen, SCN, CN, OH, OR⁵, OCOR⁵ oder COOR⁵ mit R5 für C₁-C₁₀-Alkyl oder C₃-C₁₀-Cycloalkyl steht und
R³, R⁴, R⁵ gleich oder verschieden sind und Wasserstoff, gegebenenfalls mit X substituiertes C₁-C₁₀-Alkyl, C₃-C₁₀-Cycloalkyl, C₆-C₁₈-Aryl, C₂-C₁₀-Alkinyl oder C₃-C₁₀-Alkin bedeuten,
und
b) einer offenkettigen und/oder cyclischen Aluminoxanverbindung der Formel (II) oder (III)
R^{x}R^{y}Al[O-AlR^{z}]ₘR^{w} (II), 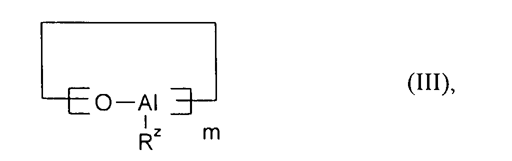
in der
R^{x}, R^{y}, R^{z}, R^{w} C₁-C₁₂-Alkyl entsprechen und
m eine ganze Zahl von 5 bis 30 darstellt.

## Claims

1. Process for the production of polyisoolefins characterised in that isoolefins of the formula CH₂=CR¹,R² where R¹ denotes methyl and R² C₁-C₁₀ alkyl or C₃-C₁₀ cycloalkyl, optionally together with conjugated or unconjugated dienes with 4 to 20 carbon atoms and/or cationically polymerisable, mono- or polyunsaturated compounds with 4 to 20 carbon atoms are polymerised at temperatures of -100°C to +200°C and pressures of 0.1 to 100 bar in solution, in suspension or in the gas phase in the presence of initiator systems consisting of:
a) hydrocarbons of the formula (I) 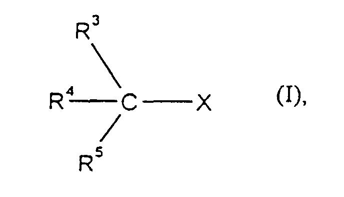 in which
X denotes halogen, SCN, CN, OH, OR⁵, OCOR⁵ or COOR⁵, where R⁵ denotes C₁-C₁₀ alkyl or C₃-C₁₀ cycloalkyl, and
R³, R⁴, R⁵ are identical or different and mean hydrogen, C₁-C₁₀ alkyl, C₃-C₁₀ cycloalkyl, C₆-C₁₈ aryl, C₂-C₁₀ alkynyl or C₃-C₁₀ alkyne, optionally substituted by X,
and
b) an open-chain and/or cyclic aluminoxane compound of the formula (II) or (III)
R^{x}R^{y}Al[O-AlR^{z}]ₘR^{w} (II), 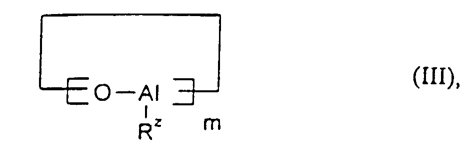
in which
R^{x}, R^{y}, R^{z}, R^{w} are C₁-C₁₂ alkyl and
m represents an integer from 5 to 30.

2. Process according to claim 1, characterised in that the process is performed at temperatures of -100 to +100°C.

3. Process according to claims 1 and 2, characterised in that the process is performed at pressures of 1 to 50 bar.

4. Process according to claims 1 to 3, characterised in that initiator component a) is used at a concentration of 10⁻² to 10⁻⁷ mol per litre of reaction volume.

5. Process according to claims 1 to 4, characterised in that initiator component b) is used in a molar ratio relative to component a) of 1:100 to 10⁴:1.

6. Initiator system for the polymerisation of isoolefins which system consists of
a) hydrocarbons of the formula (I) 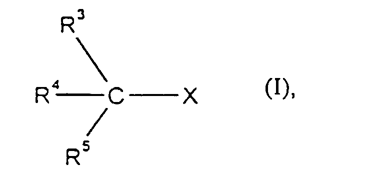 in which
X denotes halogen, SCN, CN, OH, OR⁵, OCOR⁵ or COOR⁵, where R⁵ denotes C₁-C₁₀ alkyl or C₃-C₁₀ cycloalkyl, and
R³, R⁴, R⁵ are identical or different and mean hydrogen, C₁-C₁₀ alkyl, C₃-C₁₀ cycloalkyl, C₆-C₁₈ aryl, C₂-C₁₀ alkynyl or C₃-C₁₀ alkyne, optionally substituted by X,
and
b) an open-chain and/or cyclic aluminoxane compound of the formula (II) or (III)
R^{x}R^{y}Al[O-AlR^{z}]ₘR^{w} (II), 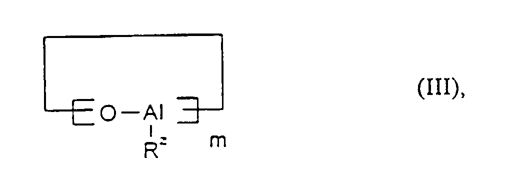
in which
R^{x}, R^{y}, R^{z}, R^{w} are C₁-C₁₂ alkyl and
m represents an integer from 5 to 30.

## Revendications

1. Procédé pour la préparation de polyisooléfines, caractérisé en ce que l'on polymérise à des températures de -100°C à +200°C et à des pressions de 0,1 à 100 bar en solution, en suspension ou en phase gazeuse des isooléfines de la formule CH₂=CR¹, R² avec R¹ étant un groupe méthyle et R² un groupe alkyle en C₁-C₁₀ ou cycloalkyle en C₃-C₁₀, éventuellement avec des diènes conjugués ou non conjugués ayant de 4 à 20atomes de carbone et/ou des composés cationiquement polymérisables, mono- ou polyinsaturés ayant de 4 à 20 atomes de carbone, en présence de systèmes d'initiateurs constitués :
a) d'hydrocarbures de la formule (I) 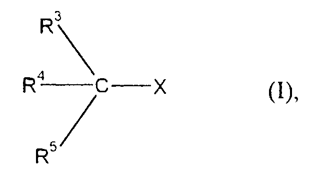 dans laquelle
X représente un atome d'halogène, SCN, CN, OH, OR⁵, OCOR⁵ ou COOR⁵ avec R⁵ représentant un groupe alkyle en C₁-C₁₀ ou cycloalkyle en C₃-C₁₀, et
R³, R⁴, R⁵ sont identiques ou différents et représentent un atome d'hydrogène, un groupe alkyle en C₁-C₁₀, cycloalkyle en C₃-C₁₀, aryle en C₆-C₁₈, alcynyle en C₂-C₁₀ ou alcyne en C₃-C₁₀ éventuellement X substitué,
et
b) d'un composé aluminoxane à chaîne ouverte et/ou cyclique de la formule (II) ou (III)
R^{X}R^{Y}Al[O-AlR^{Z}]ₘR^{W} (II), 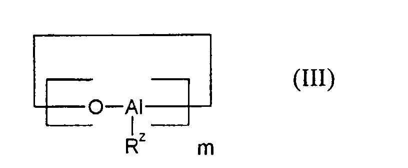
dans lesquelles
R^{X}, R^{Y}, R^{Z}, R^{W} correspondent à un groupe alkyle en C₁-C₁₂ et
m représente un nombre entier compris entre 5 et 30.

2. Procédé selon la revendication 1, caractérisé en ce que l'on travaille à des températures de -100 à +100°C.

3. Procédé selon les revendications 1 et 2, caractérisé en ce que l'on travaille à des pressions de 1 à 50 bar.

4. Procédé selon les revendications 1 à 3, caractérisé en ce que l'on utilise le constituant d'initiateur a) dans une concentration de 10⁻² à 10⁻⁷ moles par litre de volume réactionnel ou de réacteur.

5. Procédé selon les revendications 1 à 4, caractérisé en ce que l'on utilise le constituant d'initiateur b) dans un rapport molaire par rapport au constituant a) de 1:100 à 10⁴ : 1.

6. Système d'initiateur pour la polymérisation d'isooléfines constitué :
a) d'hydrocarbures de la formule (I) 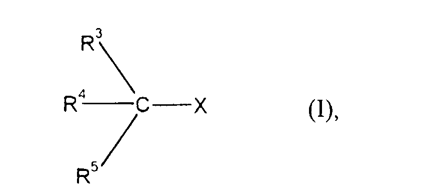 dans laquelle
X représente un atome d'halogène, SCN, CN, OH, OR⁵, OCOR⁵ ou COOR⁵ avec R⁵ représentant un groupe alkyle en C₁-C₁₀ ou cycloalkyle en C₃-C₁₀ et
R³, R⁴, R⁵ sont identiques ou différents et représentent un atome d'hydrogène, un groupe alkyle en C₁-C₁₀, cycloalkyle en C₃-C₁₀, aryle en C₆-C₁₈, alcynyle en C₂-C₁₀ ou alcyne en C₃-C₁₀ éventuellement X substitué,
et
b) d'un composé aluminoxane à chaîne ouverte et/ou cyclique de la formule (II) ou (III)
R^{X}R^{Y}Al[O-AlR^{Z}]ₘR^{W} (II), 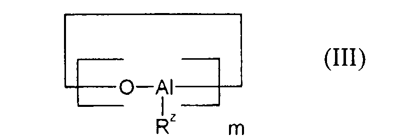
dans lesquelles
R^{X}, R^{Y}, R^{Z}, R^{W} correspondent à un groupe alkyle en C₁-C₁₂ et
m représente un nombre entier de 5 à 30.
